(19) Europäisches Patentamt / European Patent Office / Office européen des brevets

(11) **EP 2 986 464 B1**

(12) **FASCICULE DE BREVET EUROPEEN**

(45) Date de publication et mention de la délivrance du brevet:
**29.03.2017 Bulletin 2017/13**

(21) Numéro de dépôt: **14729946.5**

(22) Date de dépôt: **16.04.2014**

(51) Int Cl.:
*B60K 17/10* (2006.01)   *F16H 61/4008* (2010.01)
*F16H 61/4035* (2010.01)   *F16H 61/448* (2010.01)
*B60K 17/356* (2006.01)

(86) Numéro de dépôt international:
**PCT/FR2014/050929**

(87) Numéro de publication internationale:
**WO 2014/170608 (23.10.2014 Gazette 2014/43)**

(54) **DISPOSITIF DE TRANSMISSION HYDROSTATIQUE D'UN ENGIN MOBILE CIRCULANT DANS UNE PENTE AVEC DEVERS**

HYDROSTATISCHES GETRIEBE EINER AUF EINER GENEIGTEN SCHRÄGE BEWEGTEN ARBEITSMASCHINE

HYDROSTATIC TRANSMISSION DEVICE OF A MOBILE MACHINE TRAVELLING ON A SLOPE WITH A TILT.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2013 FR 1353471**

(43) Date de publication de la demande:
**24.02.2016 Bulletin 2016/08**

(73) Titulaires:
• **Fluid-System**
  **42420 Lorette (FR)**
• **CNH Industrial France**
  **91150 Morigny-Champigny (FR)**

(72) Inventeur: **LAGORS, Frédéric**
  **F-38200 Serpaize (FR)**

(74) Mandataire: **Roman, Alexis**
  **Cabinet Roman**
  **35 rue Paradis**
  **B.P. 30064**
  **13484 Marseille Cedex 20 (FR)**

(56) Documents cités:
**EP-A1- 0 505 254      EP-A1- 0 547 947
DE-B3- 10 255 643      FR-A1- 2 828 544
FR-A1- 2 913 218       FR-A1- 2 972 146
US-A1- 2005 031 460**

EP 2 986 464 B1

# Description

## Domaine technique de l'invention.

L'invention a pour objet un dispositif de transmission hydrostatique d'un engin mobile circulant dans une pente avec dévers. L'invention a également pour objet un procédé pour contrôler une pression hydrostatique dans un engin mobile circulant dans une pente avec dévers.

Elle concerne en particulier le domaine technique des dispositifs de transmission hydrostatique sur les engins mobiles du type engin de chantier ou agricole, et permettant de contrôler la répartition des couples dans les roues avant et arrière desdits engins.

## État de la technique.

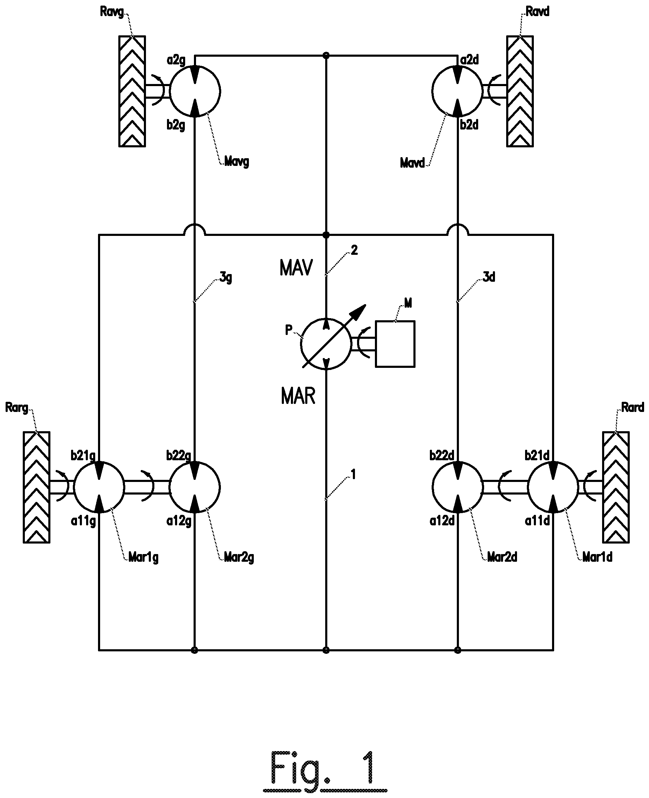

En se rapportant à la figure 1 annexée, les dispositifs de transmission hydrostatique d'un engin mobile comprennent généralement :

- au moins une roue avant gauche Ravg et une roue avant droite Ravd, et au moins une roue arrière gauche Rarg et une roue arrière droite Rard ;
- une pompe P, actionnée par un moteur M (thermique ou électrique), et dont les orifices principaux sont reliés à une conduite haute pression 1 « marche arrière » MAR, et une conduite haute pression 2 « marche avant » MAV ;
- au moins un premier moteur « avant-gauche » Mavg et au moins un second moteur « avant-droit » Mavd ; ces deux moteurs entrainent respectivement la roue avant gauche Ravg et une roue avant droite Ravd, lesquelles roues sont montées sur un essieu avant ;
- au moins un premier moteur double « arrière-gauche » et au moins un second moteur double « arrière-droit » ; ces deux moteurs entrainent respectivement la roue arrière gauche Rarg et une roue arrière droite Rard, lesquelles roues sont montées sur un essieu arrière ;
- les moteurs doubles sont chacun constitués d'un premier moteur élémentaire Mar1g, Mar1d, et d'un second moteur élémentaire Mar2d, Mar2g ; chacun des deux moteurs élémentaires Mar1g-Mar2g et Mar1d-Mar2d, ayant des orifices d'alimentation distincts ;
- les premiers moteurs élémentaires Mar1g-Mar1d, le premier moteur « avant-gauche » Mavg et le second moteur « avant-droit » Mavd sont branchés en parallèle sur la conduite haute pression 2 « marche avant »,
- les premiers moteurs élémentaires Mar1g-Mar1d et les seconds moteurs élémentaires Mar2d-Mar2g sont branchés en parallèle sur la conduite haute pression 1 « marche arrière »,
- le second moteur élémentaire Mar2g du premier moteur double « arrière-gauche » est relié en série avec le premier moteur « avant-gauche » Mavg, une conduite de série 3g existant entre ces deux moteurs,
- le second moteur élémentaire Mar2d du second moteur double « arrière-droit » est relié en série avec le second moteur « avant-droit » Mavd, une conduite de série 3d existant entre ces deux moteurs.

Ce type de dispositif, bien connu de l'homme du métier, constitue un circuit fermé de transmission. Il est habituellement qualifié de mi-parallèle/mi-série et permet, d'une part d'obtenir la synchronisation des roues grâce aux liaisons séries, et d'autre part d'obtenir des couples de sortie égaux grâce aux liaisons parallèles. De tels dispositifs sont par exemple décrits dans les documents brevets suivants : FR 2.828.544 (POCLAIN), FR 2.913.218 (POCLAIN), EP 0.547.947 (POCLAIN) ou encore FR 2.972.146 (FLUID SYSTEM).

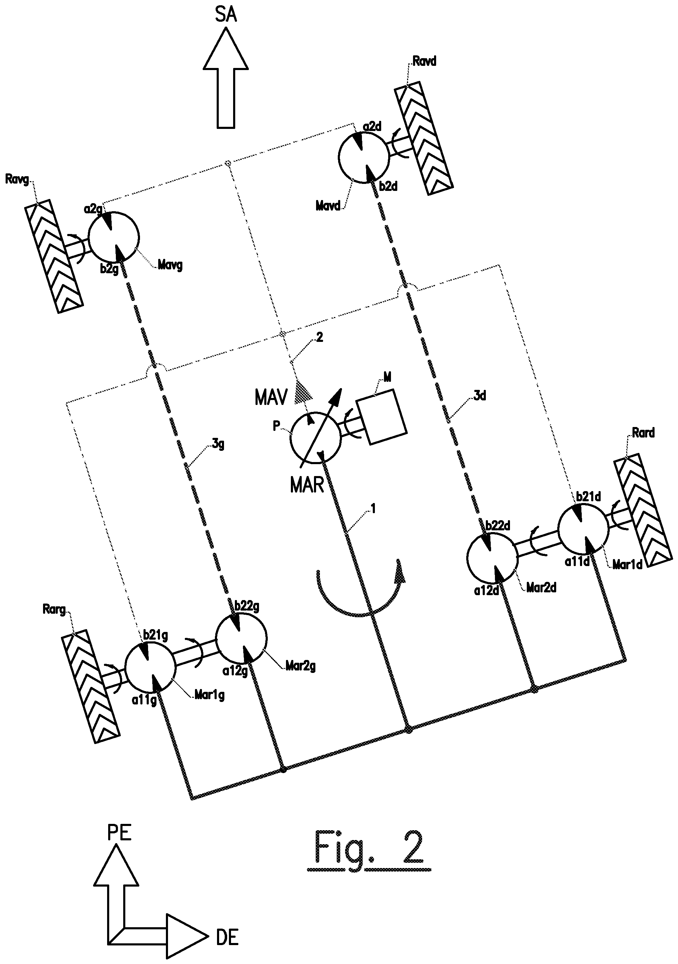

L'expérience et la théorie montre que lorsque l'engin équipé d'une telle transmission se déplace en marche avant, dans un terrain en pente avec un dévers, l'essieu arrière à tendance à dériver dans le sens dudit dévers, créant ainsi un désalignement des roues arrières Rarg, Rard, avec les roues avant Ravg, Ravd. Cette dérive de l'engin est due à un transfert de couple de freinage sur la roue avant qui est la plus haute dans le dévers, combiné à un glissement latéral du pneumatique. La mauvaise répartition du freinage sur l'engin par rapport au relief et à l'adhérence du terrain, implique que l'essieu arrière chasse dans le sens du dévers. Ce report excessif du couple de freinage trouve son explication dans l'architecture même de la transmission mi-parallèle/mi-série, et va maintenant être explicité en référence à l'exemple schématisé sur la figure 2.

Sur la figure 2, les traits continus de forte épaisseur représentent les conduites dans lesquelles le fluide circule à haute pression. Les traits discontinus de forte épaisseur représentent les conduites dans lesquelles le fluide circule à une pression intermédiaire. Les traits discontinus de faible épaisseur représentent les conduites dans lesquelles le fluide circule sans être mis sous pression. L'ensemble de ces conduites permet de former un circuit fermé de transmission hydrostatique. La flèche au niveau de la pompe P indique le sens du débit. Dans cet exemple, le sens d'avancement SA de l'engin est vers l'avant (marche avant) ; la pompe P débite dans la conduite haute pression 2 « marche avant » MAV. La pente PE est parallèle au sens d'avancement SA, l'essieu arrière étant plus haut que l'essieu avant. La pression de travail est reportée dans la conduite haute pression 1 « marche arrière ». Il y a cette inversion de pression dans les conduites haute pression 1 et 2 car l'engin devient moteur par son poids. Les moteurs deviennent des « pompes » entrainés par l'engin alors que la pompe P devient « moteur » et doit freiner l'engin en créant un couple résistant. Le dévers De est à droite, c'est-à-dire que les roues droites Ravd-Rard sont plus basses que les roues gauches Ravg-Rarg.

Dans cette configuration et de par la conception du dispositif de transmission, avec le positionnement des moteurs à double cylindrée sur l'essieu arrière, les roues arrières Rarg-Rard retiennent l'engin lorsque celui-ci descend en marche avant dans un terrain en pente. L'engin devient moteur par son poids et, sur l'essieu arrière, la roue arrière qui est la plus basse dans le dévers est la plus chargée. Cette roue définit les conditions de pression aux bornes des moteurs sur les branches parallèles du circuit. Dans l'exemple de la figure 2, la roue arrière droite Rard est la roue la plus chargée. Le couple de freinage développé sur cette roue Rard est proportionnel à la différence de pression $\Delta P_{a11d-b21d}$ aux bornes du premier moteur élémentaire Mar1d du moteur double « arrière-droit ». Cette différence de pression se recopie sur la banche parallèle du circuit, et notamment aux bornes du premier moteur élémentaire Mar1g du moteur double « arrière-gauche » :

$$\Delta P_{a11g-b21g} = \Delta P_{a11d-b21d}.$$

Cette différence de pression $\Delta P_{a11g-b21g}$ génère un couple de freinage trop important par rapport aux conditions de charge et d'adhérence de la roue arrière gauche Rarg. En effet, à cause du dévers DE, cette roue est moins chargée que la roue arrière droite Rard. De fait, pour s'adapter aux conditions de charge et d'adhérence de la roue arrière gauche Rarg, le second moteur élémentaire série Mar2g du moteur double « arrière-gauche » doit diminuer le couple total en créant un couple opposé à celui du premier moteur élémentaire Mar1g. Cette action du second moteur élémentaire Mar2g génère une montée en pression du fluide dans la conduite série gauche 3g : $P_{b22g}>>P_{b21g}$. Cette montée en pression dans la conduite série 3g génère une augmentation du couple de freinage sur la roue avant gauche Ravg. En effet, puisque $P_{a2g}=P_{b21d}$ et que $P_{b2g}>P_{a11d}$, alors :

$$\Delta P_{a2g-b2g} > \Delta P_{b21d-a11d}.$$

Le couple de freinage sur la roue avant gauche Ravg devient supérieur au couple de freinage sur la roue arrière droite Rard. Ce transfert du couple de freinage sur la roue avant gauche Ravg implique que l'essieu arrière chasse dans le sens du dévers DE.
A titre indicatif, les pressions P aux différents points du circuit illustré sur la figure 2 peuvent être les suivantes :

- $P_{b21d}=P_{b21g}=P_{a2d}=P_{a2g}=35$ bars.
- $P_{a11g}=P_{a12g}=P_{a12d}=P_{a11d}=275$ bars.
- $P_{b2d}=P_{b22d}=250$ bars (dans la conduite série droite 3d, située du côté le plus bas dans le dévers).
- $P_{b2g}=P_{b22g}=400$ bars (dans la conduite série gauche 3g, située du côté le plus haut dans le dévers).

Aucun des documents brevets précités ne traitent d'un réglage de la pression conditionnée à la circulation de l'engin dans une pente avec dévers.
Face à cet état des choses, l'objectif principal de l'invention est de proposer un dispositif de transmission hydrostatique éliminant les inconvénients précités.
Plus particulièrement, un objectif de l'invention est de proposer un dispositif de transmission permettant à l'engin d'évoluer dans une pente en dévers, sans qu'un de ses essieux ne chasse.
Un autre objectif de l'invention est de limiter, voire supprimer, tout transfert du couple de freinage sur une des roues de l'engin.

**Divulgation de l'invention.**

La solution proposée par l'invention est un dispositif de transmission hydrostatique d'un engin mobile du type décrit précédemment en référence aux figures 1 et 2 précitées, et dans lequel chaque conduite de série comprend une valve présentant une ouverture pour le passage du fluide dans la conduite de série, ladite valve comportant une position où ladite ouverture a une section maximale, et une autre position où ladite ouverture a une section réduite, le déplacement de ladite valve entre ces deux positions étant activé en réponse à une consigne de commande qui est générée lorsque l'engin mobile circule dans une pente avec dévers.
Ainsi, lorsqu'une des conduites de série monte en pression de manière excessive, la valve est activée. Dans l'exemple précité, la valve permet de diminuer la pression dans la conduite série gauche de manière à réduire le couple de freinage sur la roue avant gauche Ravg, par rapport au couple de freinage sur la roue arrière droite Rard. La trajectoire de l'engin est ainsi rectifiée, ce dernier évoluant en ligne droite sans que l'essieu arrière ne chasse.
D'autres caractéristiques avantageuses du dispositif objet de l'invention sont listées ci-dessous, chacune de ces caractéristiques pouvant être considérée seule ou combinaison avec les caractéristiques définies ci-dessus :

- la consigne de commande est préférentiellement attribuée à la valve qui est placée dans la conduite série située sur le côté le plus bas dans le dévers.
- ces valves peuvent être configurées pour se placer dans la seconde position en réponse à une consigne de commande générée manuellement depuis un organe de commande installé dans une cabine de pilotage de l'engin ou générée automatiquement depuis une unité de commande pilotée par un capteur de pente et de dévers.
- dans une variante de réalisation, le déplacement des valves entre les deux positions est commandé en fonction de la différence de pression régnant :

  ∘ d'une part dans la conduite de série la plus

chargée du dispositif,
◦ d'autre part dans la conduite de série dans laquelle ladite valve est installée.

- un sélecteur de pression peut être connecté aux deux conduites de série, lequel connecteur est configuré pour commander le déplacement des valves en fonction de la pression régnant dans la conduite de série la plus chargée.
- les valves sont avantageusement automatiquement soumises à la pression de la conduite de série la plus chargée, en réponse à une consigne de commande générée manuellement depuis un organe de commande installé dans une cabine de pilotage de l'engin ou générée automatiquement depuis une unité de commande pilotée par un capteur de pente et de dévers.
- dans une autre variante de réalisation, le déplacement de la valve entre la position active et la position inactive est commandé en fonction de la pression régnant dans la conduite de série la plus chargée du dispositif.
- les conduites de série peuvent être associées à des capteurs de pression transmettant des signaux de pression à une carte de régulation électronique, laquelle carte est configurée pour générer des consignes de commande à destination des valves de manière à les déplacer entre les deux positions, lesquelles consignes sont fonction de la pression régnant dans la conduite de série la plus chargée et de la pression régnant dans la conduite de série dans laquelle chaque valve est installée.
- la carte de régulation électronique est préférentiellement activée par un capteur de pente et de dévers.

Un autre aspect de l'invention concerne un procédé pour contrôler une pression hydrostatique d'un engin mobile circulant dans une pente avec dévers, ledit procédé consistant à :

- mettre un fluide sous pression dans une conduite haute pression « marche arrière », et dans une conduite haute pression « marche avant »,
- faire circuler le fluide vers : au moins un premier moteur « avant-gauche », au moins un second moteur « avant-droit », au moins un premier moteur double « arrière-gauche » et au moins un second moteur double « arrière-droit », lesquels moteurs doubles sont chacun constitués d'une premier moteur élémentaire et d'un second moteur élémentaire,
- brancher en parallèle, sur la conduite haute pression « marche avant », les premiers moteurs élémentaires, le premier moteur « avant-gauche » et le second moteur « avant-droit »,
- brancher en parallèle, sur la conduite haute pression « marche arrière », les premiers moteurs élémentaires et les seconds moteurs élémentaires,
- relier en série le second moteur élémentaire du premier moteur double « arrière-gauche » avec le premier moteur « avant-gauche », par l'intermédiaire d'une conduite de série,
- relier en série le second moteur élémentaire du second moteur double « arrière-droit » avec le second moteur « avant-droit », par l'intermédiaire d'une conduite de série,
- régler la pression dans au moins une des conduites de série lorsque l'engin mobile circule dans une pente avec dévers, et plus particulièrement à réduire la pression dans la conduite de série qui est située sur le côté le plus bas dans le dévers. Ce réglage de la pression est réalisé en : - installant, dans chaque conduite de série, une valve présentant une ouverture pour le passage du fluide dans la conduite de série, ladite valve comportant une première position où ladite ouverture a une section maximale, et une seconde position où ladite ouverture a une section réduite; - et activant le déplacement de la valve entre la première position et la seconde position en réponse à une consigne de commande qui est générée lorsque l'engin mobile circule dans une pente avec dévers.

Encore un autre aspect de l'invention concerne un procédé pour contrôler la trajectoire d'un engin mobile circulant dans une pente avec dévers, ledit procédé consistant à :

- mettre un fluide sous pression dans une conduite haute pression « marche arrière », et dans une conduite haute pression « marche avant »,
- faire circuler le fluide vers : au moins un premier moteur « avant-gauche », au moins un second moteur « avant-droit », au moins un premier moteur double « arrière-gauche » et au moins un second moteur double « arrière-droit », lesquels moteurs doubles sont chacun constitués d'une premier moteur élémentaire et d'un second moteur élémentaire,
- brancher en parallèle, sur la conduite haute pression « marche avant », les premiers moteurs élémentaires, le premier moteur « avant-gauche » et le second moteur « avant-droit »,
- brancher en parallèle, sur la conduite haute pression « marche arrière », les premiers moteurs élémentaires et les seconds moteurs élémentaires,
- relier en série le second moteur élémentaire du premier moteur double « arrière-gauche » avec le premier moteur « avant-gauche », par l'intermédiaire d'une conduite de série,
- relier en série le second moteur élémentaire du second moteur double « arrière-droit » avec le second moteur « avant-droit », par l'intermédiaire d'une conduite de série,
- régler la pression dans la conduite de série qui est située sur le côté le plus bas dans le dévers, de manière à ajuster les couples de freinage sur les différents moteurs. Ce réglage de la pression est réalisé en : - installant, dans chaque conduite de série, une valve présentant une ouverture pour le passage du fluide dans la conduite de série, ladite valve comportant une première position où ladite ouverture a une section maximale, et une seconde position où ladite ouverture a une section réduite; - et activant le déplacement de la valve entre la première position et la seconde position en réponse à une consigne de commande qui est générée lorsque l'engin mobile circule dans une pente avec dévers.

**Description des figures.**

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :

- la figure 1 précitée est une vue schématique d'un dispositif de transmission hydrostatique selon l'art antérieur,
- la figure 2 précitée montre le dispositif de transmission hydrostatique selon la figure 1, lorsque l'engin circule dans une pente avec dévers,
- la figure 3 est une vue schématique d'un dispositif de transmission hydrostatique conforme à l'invention selon un premier mode de réalisation,
- la figure 4 est une vue schématique d'un dispositif de transmission hydrostatique conforme à l'invention selon un second mode de réalisation, dans une première variante,
- la figure 5 est une vue schématique d'un dispositif de transmission hydrostatique conforme à l'invention selon le second mode de réalisation, dans une seconde variante.

**Modes préférés de réalisation de l'invention.**

Le dispositif de transmission hydrostatique objet de l'invention est particulièrement destiné à être utilisé dans un engin mobile du type engin de chantier ou tracteur. Il convient particulièrement à des véhicules agricoles à quatre roues motrices et cylindrée fixe ou variable, du type utilisé pour la culture de la vigne et où les terrains cultivés sont susceptibles d'être accidentés (fortes pentes, terrains glissants, ....).

Lorsque des éléments du dispositif de transmission hydrostatique sont « connectés » ou « reliés » entre eux, on entend, au sens de la présente invention, que des conduit(e)s permettent de faire circuler le fluide d'un élément à l'autre.

Comme décrit précédemment en référence aux figures 1 et 2, le dispositif de transmission hydrostatique comprend au moins une roue avant gauche Ravg et une roue avant droite Ravd (et de manière plus générale, un groupe d'organes de déplacement avant), et au moins une roue arrière gauche Rarg et une roue arrière droite Rard (et de manière plus générale, un groupe d'organes de déplacement arrière). Au moins un moteur « avant » et un moteur « arrière » contribuent respectivement à l'entraînement des roues avant Ravg, Ravd et des roues arrière Rarg, Rard.

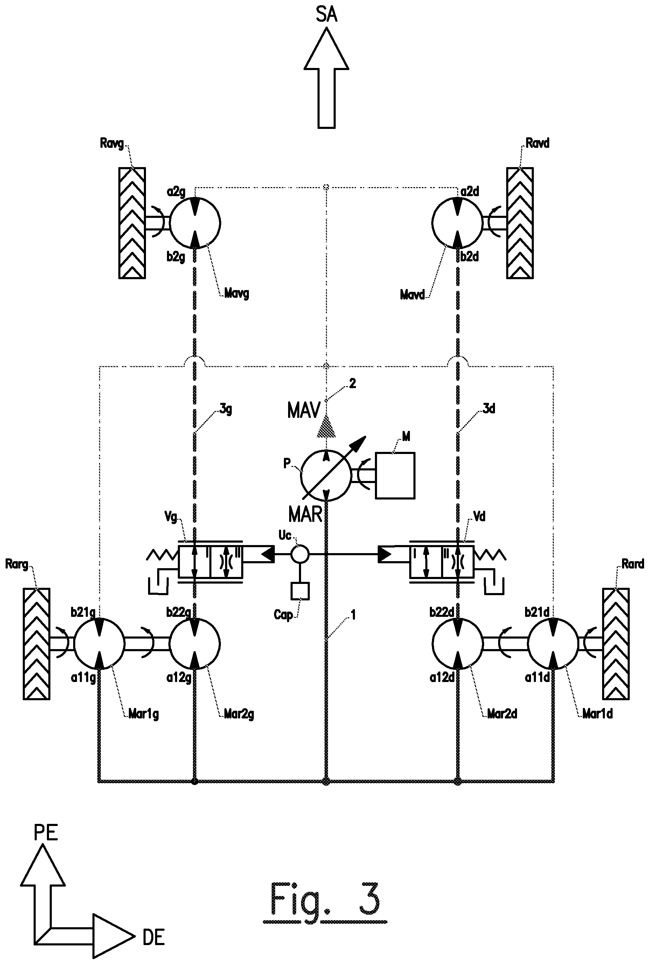

Sur les figures 3 à 5 annexées, les moteurs « avant » droit Mavd et « avant » gauche Mavg, sont des moteurs simples, c'est-à-dire constitués d'un seul moteur élémentaire. Et les moteurs « arrière » sont des moteurs doubles, c'est-à-dire constitués chacun de deux moteurs élémentaires Mar1g-Mar2g et Mar1d-Mar2d, ayant chacun des orifices d'alimentation et/ou d'échappement distincts.

L'invention ne se limite toutefois pas à cette configuration, les moteurs « avant » Mavd, Mavg pouvant être des moteurs double (ou triple, ...) et les moteurs « arrière » Mar1g-Mar2g, Mar1d-Mar2d, des moteurs à plus de deux cylindrées. Chaque moteur élémentaire peut en outre être associé à son propre organe de déplacement.

Le dispositif comporte également une pompe hydraulique P, dont les orifices principaux sont reliés à une conduite haute pression 1 « marche arrière » MAR, et une conduite haute pression 2 « marche avant » MAV. Par conduite haute pression, on entend une conduite dans laquelle est destiné à circuler un fluide sous haute pression (par exemple environ 500 bar), que le fluide circule ou non dans ladite conduite.

La pompe P débite dans de la conduite haute pression 1 « marche arrière » MAR lorsque l'engin circule en marche arrière, et débite dans la conduite haute pression 2 « marche avant » MAV lorsque l'engin circule en marche avant.

Les premiers moteurs élémentaires Mar1g-Mar1d, le premier moteur « avant-gauche » Mavg et le second moteur « avant-droit » Mavd sont branchés en parallèle sur la conduite haute pression 2 « marche avant ». Ces moteurs Mar1g, Mar1d, Mavg, Mavd ont donc chacun un orifice, respectivement b21g, b21d, a2g, a2d, relié à la conduite haute pression 2 « marche avant ».

Les premiers moteurs élémentaires Mar1g-Mar1d et les seconds moteurs élémentaires Mar2d-Mar2g sont branchés en parallèle sur la conduite haute pression 1 « marche arrière ». Ces moteurs Mar1g, Mar1d, Mar2d, Mar2g ont donc chacun un orifice, respectivement a11g, a11d, a12d, a12g, relié à la conduite haute pression 1 « marche arrière ».

Le second moteur élémentaire Mar2g du premier moteur double « arrière-gauche » est relié en série avec le premier moteur « avant-gauche » Mavg, une conduite de série gauche 3g existant entre ces deux moteurs. Ces moteurs Mar2g, Mavg ont donc chacun un orifice, respectivement b22g, b2g, relié à la conduite de série 3g.

Le second moteur élémentaire Mar2d du second moteur double « arrière-droit » est relié en série avec le second moteur « avant-droit » Mavd, une conduite de série droite 3d existant entre ces deux moteurs.

Ces moteurs Mar2d, Mavd ont donc chacun un orifice, respectivement b22d, b2d, relié à la conduite de série 3d.

On obtient ainsi un circuit fermé de transmission mi-parallèle/mi-série.

Conformément à l'invention, pour empêcher que les conduites de série 3g, 3d ne montent en pression lorsque l'engin circule dans une pente avec dévers, lesdites conduites sont chacune pourvue d'une valve Vg, Vd apte à être activée pour régler la pression dans la conduite de série auxquelles elles sont associées. Ces valves Vg, Vd sont activées en réponse à une consigne de commande qui est générée lorsque l'engin mobile circule dans une pente avec dévers. Deux modes de réalisation vont maintenant être décrits.

**Premier mode de réalisation : transfert de couple.**

Un premier mode de réalisation de l'invention va être décrit en référence à la figure 3. Dans ce mode de réalisation, les valves Vg, Vd, sont des valves de transfert de couple 2 voies-2 positions. Chaque valve Vg, Vd présente une ouverture réglable progressive pour le passage du fluide dans la conduite de série 3g, 3d à laquelle elle est associée. Dans une première position I, cette ouverture a une section maximale. Et dans une seconde position II, cette ouverture a une section réduite de sorte qu'une perte de charge est créée dans la conduite série 3g, 3d. Au repos, c'est-à-dire en l'absence de sollicitation, un ressort de rappel permet de ramener automatiquement la valve Vg, Vd dans la première position 1.

Une consigne de commande permet de passer de la position I à la position II. Cette consigne de commande peut être générée manuellement depuis un organe de commande installé dans une cabine de pilotage de l'engin. Il peut par exemple s'agir d'un bouton interrupteur actionné par le conducteur de l'engin lorsque ce dernier circule dans une pente en dévers.

Selon le mode préféré de réalisation illustré sur la figure 3, la consigne de commande est générée automatiquement depuis une unité de commande Uc pilotée par un capteur de pente et de dévers Cap. L'unité de commande Uc se présente par exemple sous la forme d'une carte électronique comportant un ou plusieurs processeurs et d'autres composants électroniques permettant de générer la consigne de commande. Le capteur Cap est par exemple un capteur permettant de générer un signal électrique à destination de l'unité Uc dès que l'engin circule sur une pente ayant une certaine inclinaison (ex : 3%) et un certain dévers (ex : 6%). La consigne générée par l'unité UC peut être proportionnelle à l'inclinaison de la pente et du dévers, de sorte que la section de l'ouverture de la valve Vg, Vd concernée soit proportionnelle à ces inclinaisons mesurées.

En réglant progressivement la section d'ouverture des valves Vg, Vd, on crée une perte de charge progressive sur la conduite série 3g, 3d sur laquelle elles sont montées. La pression d'entrée des moteurs élémentaires Mar2g, Mar2d est ainsi diminuée.

La consigne de commande permettant de passer de la position I à la position II, est attribuée à la valve Vg, Vd qui est placée dans la conduite série 3g, 3d située sur le côté le plus bas dans le dévers. Sur l'exemple illustré sur la figure 3, la valve droite Vd est activée. La pression dans la portion de la conduite de série 3d située entre $P_{b22d}$ à l'entrée du moteur élémentaire Mar2d est diminuée et la différence de pression aux bornes du moteur élémentaire Mar2d augmente. Le couple de freinage sur la roue arrière droite Rard est ainsi davantage équilibré afin de rectifier la trajectoire de l'engin. En effet, en privilégiant le freinage sur le moteur série Mar2d, le moteur parallèle Mar1d n'a pas besoin de développer un couple de freinage aussi important que celui développé dans l'exemple de la figure 2. La différence de pression $\Delta P_{a11d-b21d}$ aux bornes du moteur Mar1d est limitée, cette différence de pression se recopiant sur la banche parallèle du circuit, et notamment aux bornes du moteur Mar1g ($\Delta P_{a11g-b21g} = \Delta P_{a11d-b21d}$). Cette différence de pression $\Delta P_{a11g-b21g}$ génère un couple de freinage qui est davantage en adéquation par rapport aux conditions de charge et d'adhérence de la roue arrière gauche Rarg de sorte que le second moteur Mar2g n'a plus à compenser de manière aussi importante le couple total sur cette roue. La montée en pression du fluide dans la conduite série gauche 3g est donc limitée ainsi que le couple de freinage sur la roue avant gauche Ravg. Il est même possible d'observer une chute de pression dans cette conduite de série. Ainsi, contrairement au phénomène explicité en référence à la figure 2, le report du couple de freinage sur la roue avant gauche Ravg est limité, voire supprimé : la trajectoire de l'engin est rectifiée.

A titre indicatif, les pressions P aux différents points du circuit illustré sur la figure 3 (dans les mêmes conditions que la figure 2) peuvent être les suivantes :

- $P_{b21d}=P_{b21g}=P_{a2d}=P_{a2g}$=35 bars.
- $P_{a11g}=P_{a12g}=P_{a12d}=P_{a11d}$=200 bars.
- $P_{b2d}$= 275 bars (dans la portion de la conduite série droite 3d, située du côté le plus bas dans le dévers, entre la valve Vd et le moteur Mavd).
- $P_{b22d}$= 60 bars (dans la portion de la conduite série droite 3d, située du côté le plus bas dans le dévers, entre la valve Vd et le moteur Mar2d).
- $P_{b2g}=P_{b22g}$=225 bars (dans la conduite série gauche 3g, située du côté le plus haut dans le dévers).

**Second mode de réalisation : répartition de couple.**

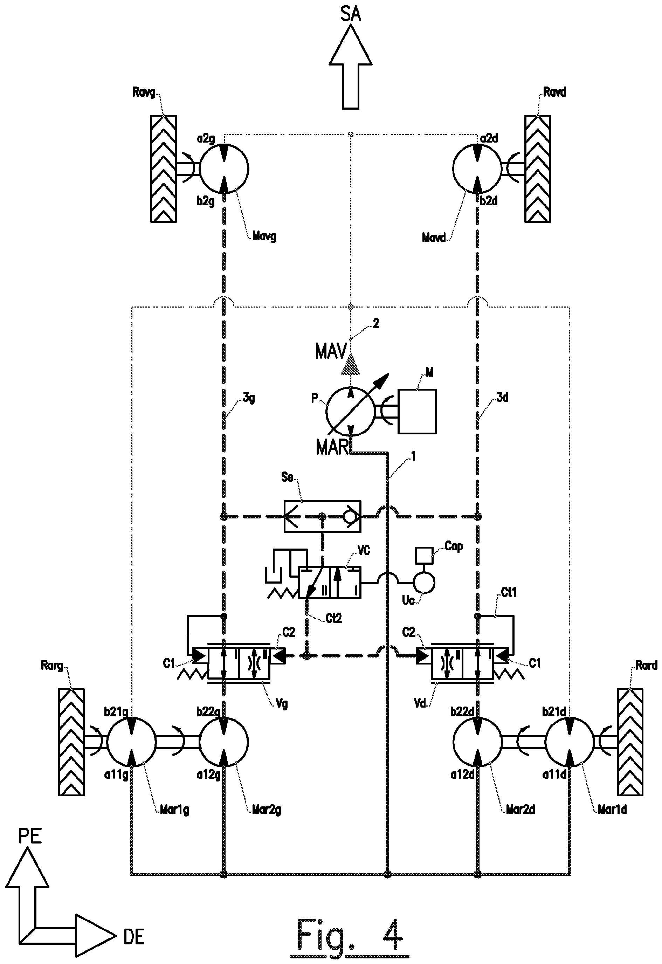

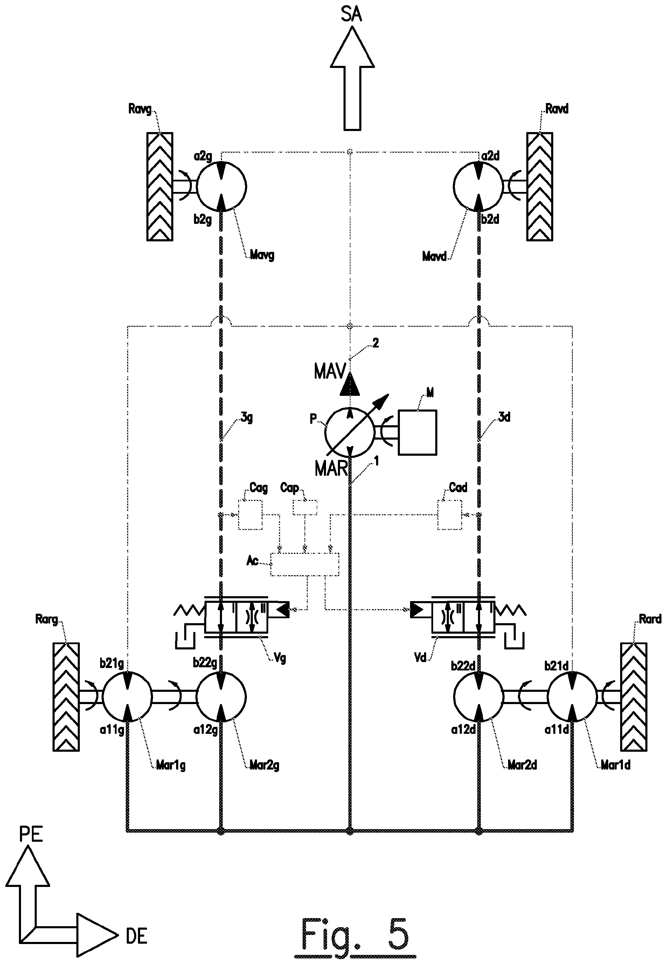

Un second mode de réalisation de l'invention va maintenant être décrit en référence aux figures 4 et 5. Dans ce mode de réalisation, les valves Vg, Vd, sont des valves de répartition de couple. Chaque valve Vg, Vd présente une ouverture réglable progressive pour le passage du fluide dans la conduite de série 3g, 3d à laquelle elle est associée. Dans une première position I, cette ouverture a une section maximale. Et dans une seconde position II, cette ouverture a une section réduite de sorte qu'une perte de charge est créée dans la conduite série 3g, 3d. Au repos, c'est-à-dire en l'absence de sollicitation, un ressort de rappel permet ramener automatiquement la valve Vg, Vd dans la première position I. Ce ressort de rappel est taré à une valeur relativement basse, par exemple 2-3 bars, de manière à ne pas interférer dans le processus de répartition de couple décrit plus après dans la description.

Le déplacement des valves Vg, Vd entre les deux positions I, II est commandé en fonction de la différence de pression régnant :

- d'une part dans la conduite de série 3g, 3d la plus chargée du dispositif.
- d'autre part dans la conduite de série 3g, 3d dans laquelle ladite valve est installée.

L'objectif est que les pressions dans les conduites série 3g, 3d s'équilibrent sur une valeur moyenne permettant un report quasi uniforme des couples de freinage sur les quatre roues Ravg, Ravd, Rarg, Rard.

Les valves Vg, Vd limitent ainsi la montée en pression dans la conduite série 3g, 3d la plus haute dans le dévers de sorte que le phénomène de dérive disparait.

Deux variantes de ce second mode de réalisation vont maintenant être décrites.

*Première variante de réalisation.*

Selon une première variante illustrée sur la figure 4, dans chaque valve Vg, Vd, un organe mobile, du type tiroir, permet de passer d'une position à l'autre. Cet organe mobile est commandé par des organes de commande. D'une manière bien connue de l'homme du métier, ces derniers se présentent avantageusement sous la forme de chambre hydraulique de commande, permettant de contrôler les valves Vg, Vd.

Un premier organe de commande C1 est relié à la conduite série à laquelle la valve Vg, Cd est connectée, dans la portion comprise entre ladite valve et le moteur avant Mavg, Mavd, par l'intermédiaire d'une conduite Ct1. Un second organe de commande C2 est relié à un sélecteur Se par l'intermédiaire d'une conduite Ct2, lequel sélecteur est connecté d'une part à la conduite série droite 3d et d'autre part à la conduite série gauche 3g. La connexion du sélecteur Se aux conduites série est réalisée dans la portion desdites conduites qui est comprise entre les valves Vg, Vd et les moteurs avant Mavg, Mavd. Le sélecteur Se permet de connecter la conduite Ct2, et donc les seconds organes de commande C2, à la conduite série 3g, 3d qui est la plus chargée. Chaque valve Vg, Vd est donc commandée en fonction de la différence de la pression régnant d'une part dans la conduite de série 3g, 3d la plus chargée du dispositif, et d'autre part dans la conduite de série 3g, 3d dans laquelle ladite valve est installée.

Une valve de commande VC est installée dans la conduite Ct2. Cette valve VC comprend : - une première position I dans laquelle elle isole la conduite Ct2 du sélecteur Se (et donc des conduites de série 3g, 3d), - et une seconde position II dans laquelle elle met en communication la conduite Ct2 avec du sélecteur Se (et donc avec les conduites de série 3g, 3d). Une consigne de commande permet de passer de la position I à la position II. Cette consigne de commande peut être générée manuellement depuis un organe de commande installé dans une cabine de pilotage de l'engin. Il peut par exemple s'agir d'un bouton interrupteur actionné par le conducteur de l'engin lorsque ce dernier circule dans une pente en dévers. Selon le mode préféré de réalisation illustré sur la figure 4, la consigne de commande est générée automatiquement depuis une unité de commande Uc pilotée par un capteur de pente et de dévers Cap, ces éléments étant similaires à ceux décrits précédemment en référence à la figure 3. Les valves Vg, Vd sont ainsi automatiquement soumises à la pression de la conduite de série 3g, 3d la plus chargée, en réponse à cette consigne de commande générée manuellement ou automatiquement.

Le fonctionnement de ce dispositif va être décrit en reprenant les mêmes conditions d'avancement, de pente et de dévers que celles évoquées précédemment. La valve de commande VC est actionnée de sorte qu'elle se place dans la position II : les valves Vg, Vd sont connectées au sélecteur Se. La conduite de série gauche 3g monte en pression, de sorte qu'elle devient la conduite série la plus chargée. La valve gauche Vg qui montée dans cette conduite série 3g, reste dans la position I puisque les pressions auxquelles elle est soumise s'équilibrent ($P_{C1}=P_{C2}$). La valve droite Vd montée dans la conduite série droite 3d, se déplace dans la position II ($P_{C1}<P_{C2}$). Tant que la pression dans la conduite série droite 3d n'atteint pas la valeur de pression dans la conduite série gauche 3d, la valve droite 3d reste dans cette seconde position II jusqu'à atteindre une positon d'équilibre telle que les pressions dans les deux conduites séries droite 3d et gauche 3g s'équilibrent. Cet équilibre permet un report quasi uniforme des couples de freinage sur les quatre roues Ravg, Ravd, Rarg, Rard, et limite donc une montée en pression excessive sur la conduite série 3g la plus haute dans le dévers : la trajectoire de l'engin est rectifiée.

A titre indicatif, les pressions P aux différents points du circuit illustré sur la figure 4 (dans les mêmes conditions que la figure 2) peuvent être les suivantes :

- $P_{b21d}=P_{b21g}=P_{a2d}=P_{a2g}=35$ bars.
- $P_{a11g}=P_{a12g}=P_{a12d}=P_{a11d}=200$ bars.
- $P_{b2d}= P_{b29}=P_{b229}=275$ bars.
- $P_{b22d}= 60$ bars.

*Seconde variante de réalisation.*

Une seconde variante est illustrée sur la figure 5. Dans cette variante, la régulation purement hydraulique de la première variante est remplacée par une régulation électro-hydraulique.

La consigne de commande permettant aux valves Vg, Vd de passer de la position I à la position II, est maintenant générée automatiquement depuis une carte de régulation électronique Ac, par exemple type PID, et comportant un ou plusieurs processeurs et d'autres composants électroniques. Cette carte Ac reçoit des informations générées par des capteurs de pression Cag, Cad associés aux conduites de série 3g, 3d. Ces capteurs de pression Cag, Cad transmettent donc des signaux de pression à la carte Ac. Dans l'exemple de la figure 3, les capteurs de pression Cag, Cad sont installés dans la portion des conduites séries 3g, 3d située entre les valves Vg, Vd et les moteurs avant Mavg, Mavd.

De la même façon que décrit précédemment, les consignes de commande générées par la carte Ac sont fonction de la pression régnant dans la conduite de série 3g, 3d la plus chargée et de la pression régnant dans ladite conduite de série dans laquelle chaque valve est installée (la conduite série gauche 3g pour la valve gauche Vg, et la conduite série droite 3d pour la valve droite Vd).

La carte Ac est préférentiellement activée par un capteur de pente et de dévers Cap. Ce dernier est du type décrit précédemment, et permet de générer un signal électrique d'activation à destination de la carte Ac dès que l'engin circule sur une pente ayant une certaine inclinaison et un certain dévers. Dès réception de ce signal d'activation, la carte Ac génère les consignes de commande de manière à ce que les pressions dans les conduites série 3g, 3d s'équilibrent sur une valeur moyenne, évitant une montée en pression excessive sur la conduite série 3g la plus haute dans le dévers.

Les dispositifs qui viennent d'être décrits permettent de rectifier la trajectoire d'un engin circulant en marche avant, dans une pente avec un dévers à droite. Même l'invention n'est pas limitée à ces paramètres. Si le dévers est à gauche, il est évident que la régulation se fera sur la conduite série gauche. De même, si l'engin circule en marche arrière, dans une pente avec un dévers, le même principe de transfert ou de répartition de couple sera appliqué, les informations de pression prises dans les conduites séries 3g, 3d, le seront toutefois dans la portion comprise entre les valves Vg, Vd et les moteurs arrières Mar2g, Mar2d.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention.

## Revendications

1. Dispositif de transmission hydrostatique d'un engin mobile comprenant :

   - une pompe (P) dont les orifices principaux sont reliés respectivement à une conduite haute pression (1) «marche arrière », et une conduite haute pression (2) « marche avant »,
   - au moins un premier moteur « avant-gauche » (Mavg) et au moins un second moteur « avant-droit » (Mavd),
   - au moins un premier moteur double « arrière-gauche » et au moins un second moteur double « arrière-droit », lesquels moteurs doubles sont chacun constitués d'un premier moteur élémentaire (Mar1g ; Mar1d) et d'un second moteur élémentaire (Mar2d ; Mar2g),
   - les premiers moteurs élémentaires (Mar1g; Mar1d), le premier moteur « avant-gauche » (Mavg) et le second moteur « avant-droit » (Mavd) sont branchés en parallèle sur la conduite haute pression (2) « marche avant »,
   - les premiers moteurs élémentaires (Mar1g; Mar1d) et les seconds moteurs élémentaires (Mar2d ; Mar2g) sont branchés en parallèle sur la conduite haute pression (1) « marche arrière »,
   - le second moteur élémentaire (Mar2g) du premier moteur double « arrière-gauche » est relié en série avec le premier moteur « avant-gauche » (Mavg), une conduite de série (3g) existant entre ces deux moteurs,
   - le second moteur élémentaire (Mar2d) du second moteur double « arrière-droit » est relié en série avec le second moteur « avant-droit » (Mavd), une conduite de série (3d) existant entre ces deux moteurs,

   **se caractérisant par le fait que** chaque conduite de série (3g, 3d) comprend une valve (Vg, Vd) présentant une ouverture pour le passage du fluide dans la conduite de série, ladite valve comportant une première position (I) où ladite ouverture a une section maximale, et une seconde position (II) où ladite ouverture a une section réduite, le déplacement de ladite valve entre ces deux positions étant activé en réponse à une consigne de commande qui est générée lorsque l'engin mobile circule dans une pente avec dévers.

2. Dispositif selon la revendication 1, dans lequel la consigne de commande est attribuée à la valve (Vg, Vd) qui est placée dans la conduite série (3g, 3d) située sur le côté le plus bas dans le dévers.

3. Dispositif selon l'une des revendications 1 ou 2, dans lequel les valves (Vg, Vd) sont configurées pour se placer dans la seconde position (II) en réponse à une consigne de commande générée manuellement depuis un organe de commande installé dans une cabine de pilotage de l'engin.

4. Dispositif selon l'une des revendications 1 ou 2, dans lequel les valves (Vg, Vd) sont configurées pour se placer dans la seconde position (II) en réponse à une consigne de commande générée automatiquement depuis une unité de commande (Uc) pilotée par un capteur de pente et de dévers (Cap).

5. Dispositif selon l'une des revendications 1 ou 2, dans lequel le déplacement des valves (Vg, Vd) entre les deux positions (I, II) est commandé en fonction de la différence de pression régnant :

- d'une part dans la conduite de série (3g, 3d) la plus chargée du dispositif,
- d'autre part dans la conduite de série (3g, 3d) dans laquelle ladite valve est installée.

6. Dispositif selon la revendication 5, dans lequel un sélecteur de pression (Se) est connecté aux deux conduites de série (3g, 3d), lequel sélecteur est configuré pour commander le déplacement des valves (Vg, Vd) en fonction de la pression régnant dans la conduite de série (3g, 3d) la plus chargée.

7. Dispositif selon l'une des revendications 5 ou 6, dans lequel les valves (Vg, Vd) sont automatiquement soumises à la pression de la conduite de série (3g, 3d) la plus chargée, en réponse à une consigne de commande générée manuellement depuis un organe de commande installé dans une cabine de pilotage de l'engin.

8. Dispositif selon l'une des revendications 5 ou 6, dans lequel les valves (Vg, Vd) sont automatiquement soumises à la pression de la conduite de série la plus chargée (3g, 3d), en réponse à une consigne de commande générée automatiquement depuis une unité de commande (Uc) pilotée par un capteur de pente et de dévers (Cap).

9. Dispositif selon la revendication 5, dans lequel les conduites de série (3g, 3d) sont associées à des capteurs de pression (Cag, Cad) transmettant des signaux de pression à une carte de régulation électronique (Ac), laquelle carte est configurée pour générer des consignes de commande à destination des valves (Vg, Vd) de manière à les déplacer entre les deux positions (I, II), lesquelles consignes sont fonction de la pression régnant dans la conduite de série (3g, 3d) la plus chargée et de la pression régnant dans la conduite de série (3g, 3d) dans laquelle chaque valve est installée.

10. Dispositif selon la revendication 9, dans laquelle la carte de régulation électronique (Ac) est activée par un capteur de pente et de dévers (Cap).

11. Procédé pour contrôler une pression hydrostatique d'un engin mobile circulant dans une pente avec dévers, ledit procédé consistant à :

- mettre un fluide sous pression dans une conduite haute pression (1) « marche arrière », et dans une conduite haute pression (2) « marche avant »,
- faire circuler le fluide vers : au moins un premier moteur « avant-gauche » (Mavg), au moins un second moteur « avant-droit » (Mavd), au moins un premier moteur double « arrière-gauche » et au moins un second moteur double « arrière-droit », lesquels moteurs doubles sont chacun constitués d'une premier moteur élémentaire (Mar1g; Mar1d) et d'un second moteur élémentaire (Mar2d ; Mar2g),
- brancher en parallèle, sur la conduite haute pression (2) « marche avant », les premiers moteurs élémentaires (Mar1g; Mar1d), le premier moteur « avant-gauche » (Mavg) et le second moteur « avant-droit » (Mavd),
- brancher en parallèle, sur la conduite haute pression (1) « marche arrière », les premiers moteurs élémentaires (Mar1g; Mar1d) et les seconds moteurs élémentaires (Mar2d ; Mar2g),
- relier en série le second moteur élémentaire (Mar2g) du premier moteur double « arrière-gauche » avec le premier moteur « avant-gauche » (Mavg), par l'intermédiaire d'une conduite de série (3g),
- relier en série le second moteur élémentaire (Mar2d) du second moteur double « arrière-droit » avec le second moteur « avant-droit » (Mavd), par l'intermédiaire d'une conduite de série (3d),

**se caractérisant par le fait que** ledit procédé comprend en outre une étape consistant à régler la pression dans au moins une des conduites de série (3g, 3d) lorsque l'engin mobile circule dans une pente avec dévers, lequel réglage est réalisé en :

- installant, dans chaque conduite de série (3g, 3d), une valve (Vg, Vd) présentant une ouverture pour le passage du fluide dans la conduite de série, ladite valve comportant une première position (I) où ladite ouverture a une section maximale, et une seconde position (II) où ladite ouverture a une section réduite,
- activant le déplacement de la valve (Vg, Vd) entre la première position (I) et la seconde position (II) en réponse à une consigne de commande qui est générée lorsque l'engin mobile circule dans une pente avec dévers.

12. Procédé selon la revendication 11, consistant à réduire la pression dans la conduite de série (3g, 3d) qui est située sur le côté le plus bas dans le dévers.

13. Procédé pour contrôler la trajectoire d'un engin mobile circulant dans une pente avec dévers, ledit procédé consistant à :

- mettre un fluide sous pression dans une conduite haute pression (1) « marche arrière », et dans une conduite haute pression (2) « marche avant »,
- faire circuler le fluide vers : au moins un premier moteur « avant-gauche » (Mavg), au moins un second moteur « avant-droit » (Mavd), au moins un premier moteur double « arrière-gauche » et au moins un second moteur double « arrière-droit », lesquels moteurs doubles sont chacun constitués d'une premier moteur élémentaire (Mar1g; Mar1d) et d'un second moteur élémentaire (Mar2d ; Mar2g),
- brancher en parallèle, sur la conduite haute pression (2) « marche avant », les premiers moteurs élémentaires (Mar1g; Mar1d), le premier moteur « avant-gauche » (Mavg) et le second moteur « avant-droit » (Mavd),
- brancher en parallèle, sur la conduite haute pression (1) « marche arrière », les premiers moteurs élémentaires (Mar1g; Mar1d) et les seconds moteurs élémentaires (Mar2d ; Mar2g),
- relier en série le second moteur élémentaire (Mar2g) du premier moteur double « arrière-gauche » avec le premier moteur « avant-gauche » (Mavg), par l'intermédiaire d'une conduite de série (3g),
- relier en série le second moteur élémentaire (Mar2d) du second moteur double « arrière-droit » avec le second moteur « avant-droit » (Mavd), par l'intermédiaire d'une conduite de série (3d),

se caractérisant par le fait que ledit procédé comprend en outre une étape consistant à régler la pression dans la conduite de série (3g, 3d) qui est située sur le côté le plus bas dans le dévers, de manière à ajuster les couples de freinage sur les différents moteurs (Mavg, Mavg, Mar1g, Mar1d, Mar2d, Mar2g), lequel réglage est réalisé en :

- installant, dans chaque conduite de série (3g, 3d), une valve (Vg, Vd) présentant une ouverture pour le passage du fluide dans la conduite de série, ladite valve comportant une première position (I) où ladite ouverture a une section maximale, et une seconde position (II) où ladite ouverture a une section réduite,

- activant le déplacement de la valve (Vg, Vd) entre la première position (I) et la seconde position (II) en réponse à une consigne de commande qui est générée lorsque l'engin mobile circule dans une pente avec dévers.

**Patentansprüche**

1. Hydrostatisches Getriebe einer beweglichen Arbeitsmaschine, umfassend:

- eine Pumpe (P), deren Hauptöffnungen jeweils mit einer Hochdruckleitung (1) "Rückwärtsbewegung" und einer Hochdruckleitung (2) "Vorwärtsbewegung" verbunden sind,
- mindestens einen ersten Motor "vorne links" (Mavg) und mindestens einen zweiten Motor "vorne rechts" (Mavd),
- mindestens einen ersten Doppelmotor "hinten links" und mindestens einen zweiten Doppelmotor "hinten rechts", wobei die Doppelmotoren jeweils aus einem ersten Elementarmotor (Mar1g; Mar1d) und einem zweiten Elementarmotor (Mar2d; Mar2g) gebildet sind,
- wobei die ersten Elementarmotoren (Mar1g; Mar1d), der erste Motor "vorne links" (Mavg) und der zweite Motor "vorne rechts" (Mavd) auf der Hochdruckleitung (2) "Vorwärtsbewegung" parallel geschaltet sind,
- die ersten Elementarmotoren (Mar1g; Mar1d) und die zweiten Elementarmotoren (Mar2d; Mar2g) auf der Hochdruckleitung (1) "Rückwärtsbewegung" parallel geschaltet sind,
- der zweite Elementarmotor (Mar2g) des ersten Doppelmotors "hinten links" mit dem ersten Motor "vorne links" (Mavg) in Reihe geschaltet ist, wobei zwischen diesen zwei Motoren eine Reihenleitung (3g) vorhanden ist,
- der zweite Elementarmotor (Mar2d) des zweiten Doppelmotors "hinten rechts" mit dem zweiten Motor "vorne rechts" (Mavd) in Reihe geschaltet ist, wobei zwischen diesen zwei Motoren eine Reihenleitung (3d) vorhanden ist,

dadurch gekennzeichnet, dass jede Reihenleitung (3g, 3d) ein Ventil (Vg, Vd) aufweist, das eine Öffnung für den Durchgang der Flüssigkeit in die Reihenleitung aufweist, wobei das Ventil eine erste Position (I), in der die Öffnung einen maximalen Querschnitt aufweist, und eine zweite Position (II) aufweist, in der die Öffnung einen verringerten Querschnitt aufweist, wobei das Verschieben des Ventils zwischen diesen zwei Positionen als Antwort auf eine Steueranweisung aktiviert wird, die erzeugt wird, wenn sich die bewegliche Arbeitsmaschine auf einer Neigung mit Quergefälle bewegt.

**2.** Vorrichtung nach Anspruch 1, wobei die Steueranweisung dem Ventil (Vg, Vd) zugeordnet ist, das in der Reihenleitung (3g, 3d) angeordnet ist, die sich auf der untersten Seite auf dem Quergefälle befindet.

**3.** Vorrichtung nach einem der Ansprüche 1 oder 2, wobei die Ventile (Vg, Vd) konfiguriert sind, um als Antwort auf eine Steueranweisung, die manuell von einem Steuerorgan erzeugt wird, das in einer Führerkabine der Maschine installiert ist, in die zweite Position (II) bewegt zu werden.

**4.** Vorrichtung nach einem der Ansprüche 1 oder 2, wobei die Ventile (Vg, Vd) konfiguriert sind, um als Antwort auf eine Steueranweisung, die automatisch von einer Steuereinheit (Uc) erzeugt wird, die von einem Neigungs- und Quergefällesensor (Cap) gesteuert wird, in die zweite Position (II) bewegt zu werden.

**5.** Vorrichtung nach einem der Ansprüche 1 oder 2, wobei das Verschieben der Ventile (Vg, Vd) zwischen den zwei Positionen (I, II) in Abhängigkeit von der Druckdifferenz gesteuert wird, die:

- einerseits in der am meisten belasteten Reihenleitung (3g, 3d) der Vorrichtung,
- andererseits in der Reihenleitung (3g, 3d), in der das Ventil installiert ist, herrscht.

**6.** Vorrichtung nach Anspruch 5, wobei ein Druckwählschalter (Se) an die zwei Reihenleitungen (3g, 3d) angeschlossen ist, wobei der Wählschalter konfiguriert ist, um das Verschieben der Ventile (Vg, Vd) in Abhängigkeit von dem Druck, der in der am meisten belasteten Reihenleitung (3g, 3d) herrscht, zu steuern.

**7.** Vorrichtung nach einem der Ansprüche 5 oder 6, wobei die Ventile (Vg, Vd) als Antwort auf eine Steueranweisung, die manuell von einem Steuerorgan erzeugt wird, das in einer Führerkabine der Maschine installiert ist, automatisch dem Druck der am meisten belasteten Reihenleitung (3g, 3d) unterworfen werden.

**8.** Vorrichtung nach einem der Ansprüche 5 oder 6, wobei die Ventile (Vg, Vd) als Antwort auf eine Steueranweisung, die automatisch von einer Steuereinheit (Uc) erzeugt wird, die von einem Neigungs- und Quergefällesensor (Cap) gesteuert wird, automatisch dem Druck der am meisten belasteten Reihenleitung (3g, 3d) unterworfen werden.

**9.** Vorrichtung nach Anspruch 5, wobei die Reihenleitungen (3g, 3d) Drucksensoren (Cag, Cad) zugeordnet sind, die Drucksignale an eine elektronische Karte zur Steuerung (Ac) übertragen, wobei die Karte konfiguriert ist, um Steueranweisungen an die Ventile (Vg, Vd) derart zu erzeugen, um sie zwischen den zwei Positionen (I, II) zu verschieben, wobei die Anweisungen von dem Druck, der in der am meisten belasteten Reihenleitung (3g, 3d) herrscht, und von dem Druck abhängen, der in der Reihenleitung (3g, 3d) herrscht, in der das Ventil installiert ist.

**10.** Vorrichtung nach Anspruch 9, wobei die elektronische Karte zur Steuerung (Ac) durch einen Neigungs- und Quergefällesensor (Cap) aktiviert wird.

**11.** Verfahren zum Steuern eines hydrostatischen Drucks einer beweglichen Arbeitsmaschine, die sich auf einer Neigung mit Quergefälle bewegt, wobei das Verfahren darin besteht:

- eine Flüssigkeit unter Druck in eine Hochdruckleitung (1) "Rückwärtsbewegung" und in eine Hochdruckleitung (2) "Vorwärtsbewegung" zu geben,
- die Flüssigkeit zu: mindestens einem ersten Motor "vorne links" (Mavg), mindestens einem zweiten Motor "vorne rechts" (Mavd), mindestens einem ersten Doppelmotor "hinten links" und mindestens einem zweiten Doppelmotor "hinten rechts" zirkulieren zu lassen, wobei die Doppelmotoren jeweils aus einem ersten Elementarmotor (Mar1g; Mar1d) und einem zweiten Elementarmotor (Mar2d; Mar2g) gebildet sind,
- die ersten Elementarmotoren (Mar1g; Mar1d), den ersten Motor "vorne links" (Mavg) und den zweiten Motor "vorne rechts" (Mavd) auf der Hochdruckleitung (2) "Vorwärtsbewegung" parallel zu schalten,
- die ersten Elementarmotoren (Mar1g; Mar1d) und die zweiten Elementarmotoren (Mar2d; Mar2g) auf der Hochdruckleitung (1) "Rückwärtsbewegung" parallel zu schalten,
- den zweiten Elementarmotor (Mar2g) des ersten Doppelmotors "hinten links" mit dem ersten Motor "vorne links" (Mavg) über eine Reihenleitung (3g) in Reihe zu schalten,
- den zweiten Elementarmotor (Mar2g) des zweiten Doppelmotors "hinten rechts" mit dem zweiten Motor "vorne rechts" (Mavd) über eine Reihenleitung (3d) in Reihe zu schalten,

**dadurch gekennzeichnet, dass** das Verfahren ferner einen Schritt aufweist, der darin besteht, den Druck in mindestens einer der Reihenleitungen (3g, 3d) einzustellen, wenn sich die bewegliche Arbeitsmaschine auf einer Neigung mit Quergefälle bewegt, wobei das Einstellen durchgeführt wird, indem:

- in jeder Reihenleitung (3g, 3d) ein Ventil (Vg, Vd) installiert wird, das eine Öffnung für den Durchgang der Flüssigkeit in die Reihenleitung aufweist, wobei das Ventil eine erste Position (I), in der die Öffnung einen maximalen Querschnitt aufweist, und eine zweite Position (II) aufweist, in der die Öffnung einen verringerten Querschnitt aufweist,

- das Verschieben des Ventils (Vg, Vd) zwischen der ersten Position (I) und der zweiten Position (II) als Antwort auf eine Steueranweisung aktiviert wird, die erzeugt wird, wenn sich die bewegliche Arbeitsmaschine auf einer Neigung mit Quergefälle bewegt.

12. Verfahren nach Anspruch 11, das darin besteht, den Druck in der Reihenleitung (3g, 3d) zu reduzieren, die sich auf der untersten Seite auf dem Quergefälle befindet.

13. Verfahren zum Steuern der Bahn einer beweglichen Arbeitsmaschine, die sich auf einer Neigung mit Quergefälle bewegt, wobei das Verfahren darin besteht:

- eine Flüssigkeit unter Druck in eine Hochdruckleitung (1) "Rückwärtsbewegung" und in eine Hochdruckleitung (2) "Vorwärtsbewegung" zu geben,
- die Flüssigkeit zu: mindestens einem ersten Motor "vorne links" (Mavg), mindestens einem zweiten Motor "vorne rechts" (Mavd), mindestens einem ersten Doppelmotor "hinten links" und mindestens einem zweiten Doppelmotor "hinten rechts" zirkulieren zu lassen, wobei die Doppelmotoren jeweils aus einem ersten Elementarmotor (Mar1g; Mar1d) und einem zweiten Elementarmotor (Mar2d; Mar2g) gebildet sind,
- die ersten Elementarmotoren (Mar1g; Mar1d), den ersten Motor "vorne links" (Mavg) und den zweiten Motor "vorne rechts" (Mavd) auf der Hochdruckleitung (2) "Vorwärtsbewegung" parallel zu schalten,
- die ersten Elementarmotoren (Mar1g; Mar1d) und die zweiten Elementarmotoren (Mar2d; Mar2g) auf der Hochdruckleitung (1) "Rückwärtsbewegung" parallel zu schalten,
- den zweiten Elementarmotor (Mar2g) des ersten Doppelmotors "hinten links" mit dem ersten Motor "vorne links" (Mavg) über eine Reihenleitung (3g) in Reihe zu schalten,
- den zweiten Elementarmotor (Mar2d) des zweiten Doppelmotors "hinten rechts" mit dem zweiten Motor "vorne rechts" (Mavd) über eine Reihenleitung (3d) in Reihe zu schalten,

**dadurch gekennzeichnet, dass** das Verfahren ferner einen Schritt aufweist, der darin besteht, den Druck in der Reihenleitung (3g, 3d), die sich auf der untersten Seite auf dem Quergefälle befindet, derart einzustellen, um die Bremsmomente auf den verschiedenen Motoren (Mavg, Mavg, Mar1g, Mar1d, Mar2d, Mar2g) einzustellen, wobei das Einstellen durchgeführt wird, indem:

- in jeder Reihenleitung (3g, 3d) ein Ventil (Vg, Vd) installiert wird, das eine Öffnung für den Durchgang der Flüssigkeit in die Reihenleitung aufweist, wobei das Ventil eine erste Position (I), in der die Öffnung einen maximalen Querschnitt aufweist, und eine zweite Position (II) aufweist, in der die Öffnung einen verringerten Querschnitt aufweist,
- das Verschieben des Ventils (Vg, Vd) zwischen der ersten Position (I) und der zweiten Position (II) als Antwort auf eine Steueranweisung aktiviert wird, die erzeugt wird, wenn sich die bewegliche Arbeitsmaschine auf einer Neigung mit Quergefälle bewegt.

**Claims**

1. Hydrostatic transmission device of a mobile machine, comprising:

- a pump (P) the main orifices of which are connected respectively to a "reversing-travel" high-pressure pipe (1) and a "forwards-travel" high-pressure pipe (2),
- at least one "front-left" first motor (Mavg) and at least one "front-right" second motor (Mavd),
- at least one "rear-left" first double motor and at least one "rear-right" second double motor, which double motors are each made up of a first elementary motor (Mar1g; Mar1d) and a second elementary motor (Mar2d; Mar2g),
- the first elementary motors (Mar1g; Mar1d), the "front-left" first motor (Mavg) and the "front-right" second motor (Mavd) are connected in parallel to the "forwards-travel" high-pressure pipe (2),
- the first elementary motors (Mar1g; Mar1d) and the secondary elementary motors (Mar2d; Mar2g) are connected in parallel to the "reversing-travel" high-pressure pipe (1),
- the second elementary motor (Mar2g) of the "rear-left" first double motor is connected in series with the "front-left" first motor (Mavg), there being a series pipe (3g) between these two motors,
- the secondary elementary motor (Mar2d) of the "rear-right" second double motor is connected in series with the "front-right" second motor (Mavd), there being a series pipe (3d) between these two motors,

**characterized in that** each series pipe (3g, 3d) comprises a valve (Vg, Vd) having an opening for the passage of the fluid in the series pipe, the said valve comprising a first position (I) in which the said opening has a maximum cross section and a second position (II) in which the said opening has a reduced cross section, the movement of the said valve between these two positions being activated in response to a command instruction generated when the mobile machine is travelling along a slope with a tilting side-slope.

2. Device according to Claim 1, in which the command instruction is attributed to the valve (Vg, Vd) which is placed in the series pipe (3g, 3d) situated on the side that is lowest down in the side-slope.

3. Device according to one of Claims 1 and 2, in which the valves (Vg, Vd) are configured to adopt the second position (II) in response to a command instruction generated manually from a control member installed in the driving cab of the machine.

4. Device according to one of Claims 1 and 2, in which the valves (Vg, Vd) are configured to adopt the second position (II) in response to a command instruction generated automatically from a control unit (Uc) controlled by a slope and side-slope sensor (Cap).

5. Device according to one of Claims 1 and 2, in which the movement of the valves (Vg, Vd) between the two positions (I, II) is commanded according to the pressure difference prevailing:

   - on the one hand, in the most heavily loaded series pipe (3g, 3d) of the device,
   - on the other hand in the series pipe (3g, 3d) in which the said valve is installed.

6. Device according to Claim 5, in which a pressure selector (Se) is connected to the two series pipes (3g, 3d), which selector is configured to command the movement of the valves (Vg, Vd) as a function of the pressure prevailing in the most heavily loaded series pipe (3g, 3d).

7. Device according to one of Claims 5 and 6, in which the valves (Vg, Vd) are automatically subjected to the pressure of the most heavily loaded series pipe (3g, 3d) in response to a command instruction generated manually from a control member installed in a driving cab of the machine.

8. Device according to one of Claims 5 and 6, in which the valves (Vg, Vd) are automatically subjected to the pressure of the most heavily loaded series pipe (3g, 3d) in response to a command instruction generated automatically from a control unit (Uc) controlled by a slope and side-slope sensor (Cap).

9. Device according to Claim 5, in which the series pipes (3g, 3d) are associated with pressure sensors (Cag, Cad) transmitting pressure signals to an electronic regulation board (Ac), which board is configured to generate command instructions intended for the valves (Vg, Vd) to cause them to move between the two positions (I, II) which instructions are a function of the pressure prevailing in the most heavily loaded series pipe (3g, 3d) and the pressure prevailing in the series pipe (3g, 3d) in which each valve is installed.

10. Device according to Claim 9, in which the electronic regulation board (Ac) is activated by a slope and side-slope sensor (Cap).

11. Method for controlling a hydrostatic pressure of a mobile machine travelling along a slope with a tilting side-slope, the said method consisting in:

   - introducing a pressurized fluid into a "reversing-travel" high-pressure pipe (1) and into a "forwards-travel" high-pressure pipe (2),
   - causing the fluid to circulate towards: at least a "front-left" first motor (Mavg), at least a "front-right" second motor (Mavd), at least one "rear-left" first double motor and at least one "rear-right" second double motor, which double motors are each made up of a first elementary motor (Mar1g; Mar1d) and of a secondary elementary motor (Mar2d; Mar2g),
   - connecting the first elementary motors (Mar1g; Mar1d), the "front-left" first motor (Mavg) and the "front-right" second motor (Mavd) in parallel to the "forwards-travel" high-pressure pipe (2),
   - connecting the first elementary motors (Mar1g; Mar1d) and the second elementary motors (Mar2d; Mar2g) in parallel to the "reversing-travel" high-pressure pipe (1),
   - connecting the second elementary motor (Mar2g) of the "rear-left" first double motor in series with the "front-left" first motor (Mavg) using a series pipe (3g),
   - connecting the second elementary motor (Mar2d) of the "rear-right" second double motor in series with the "front-right" second motor (Mavd) using a series pipe (3d),

   **characterized in that** the said method further comprises a step consisting in regulating the pressure in at least one of the series pipes (3g, 3d) when the mobile machine is travelling along a slope with a tilting side-slope, which regulation is performed by:

   - installing, in each series pipe (3g, 3d), a valve (Vg, Vd) having an opening for the passage of the fluid in the series pipe, the said valve comprising a first position (I) in which the said opening has a maximum cross section, and a second position (II) in which the opening has a reduced cross section,

- activating the movement of the valve (Vg, Vd) between the first position (I) and the second position (II) in response to a command instruction which is generated when the mobile machine is travelling along a slope with a tilting side-slope.

12. Method according to Claim 11, consisting in reducing the pressure in the series pipe (3g, 3d) situated on the side that is lowest down in the side-slope.

13. Method for controlling the path of a mobile machine travelling along a slope with a tilting side-slope, the said method consisting in:

- introducing a pressurized fluid into a "reversing-travel" high-pressure pipe (1) and into a "forwards-travel" high-pressure pipe (2),
- causing the fluid to circulate towards: at least a "front-left" first motor (Mavg), at least a "front-right" second motor (Mavd), at least one "rear-left" first double motor and at least one "rear-right" second double motor, which double motors are each made up of a first elementary motor (Mar1g; Mar1d) and of a secondary elementary motor (Mar2d; Mar2g),
- connecting the first elementary motors (Mar1g; Mar1d), the "front-left" first motor (Mavg) and the "front-right" second motor (Mavd) in parallel to the "forwards-travel" high-pressure pipe (2),
- connecting the first elementary motors (Mar1g; Mar1d) and the second elementary motors (Mar2d; Mar2g) in parallel to the "reversing-travel" high-pressure pipe (1),
- connecting the second elementary motor (Mar2g) of the "rear-left" first double motor in series with the "front-left" first motor (Mavg) using a series pipe (3g),
- connecting the second elementary motor (Mar2d) of the "rear-right" second double motor in series with the "front-right" second motor (Mavd) using a series pipe (3d),

**characterized in that** the said method further comprises a step consisting in regulating the pressure in the series pipe (3g, 3d) situated on the side that is lowest down in the side-slope so as to adjust the braking torques on the various motors (Mavg, Mavg, Mar1g, Mar1d, Mar2d, Mar2g), which regulation is performed by:

- installing, in each series pipe (3g, 3d), a valve (Vg, Vd) having an opening for the passage of the fluid in the series pipe, the said valve comprising a first position (I) in which the said opening has a maximum cross section, and a second position (II) in which the said opening has a reduced cross section,

- activating the movement of the valve (Vg, Vd) between the first position (I) and the second position (II) in response to a command instruction which is generated when the mobile machine is travelling along a slope with a tilting side-slope.

Fig. 1

Fig. 2

SA

Ravg

a2g

b2g

Mavg

Ravd

a2d

b2d

Mavd

2

MAV

3g

3d

M

P

MAR

Vg

Vd

Uc

Rarg

b21g

a11g

Mar1g

b22g

a12g

Mar2g

Cap

1

b22d

a12d

Mar2d

b21d

a11d

Mar1d

Rard

PE

DE

## Fig. 3

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828544
- FR 2913218
- EP 0547947 A
- FR 2972146